# EUROPEAN PATENT APPLICATION

(11) **EP 1 557 986 A1**
(43) Date of publication of application: **27.07.2005**
(21) Application number: 04290170.2
(22) Date of filing: 22.01.2004
(51) Int. Cl.: H04L 12/56

(54) **Multi-criteria load balancing device for a network equipment of a communication network**

(71) Applicant: ALCATEL, 75008 Paris (FR)
(72) Inventor: Randriamasy, Claire-Sabine, 92190 Meudon (FR)
(74) Representative: Narmon, Gisèle

(57) **Abstract**

A load balancing device (D) is dedicated to a communication network (N) comprising a plurality of network equipments (R) defining nodes. The device comprises i) a first processing means (PM1) arranged to compute a set of equivalent paths between a source node and a destination node to transmit traffic therebetween, considering multiple criteria bearing respective weights, each path being associated with a cost value representative of its rank in the set, and ii) a second processing means (PM2) arranged to feed the first processing means (PM1) with a designation of a critical link between a source node and a destination node and with the multiple criteria bearing respective chosen weight in order it outputs a set of equivalent paths associated with cost values, and to be fed by the first processing means (PM1) to determine a sharing out of a traffic intended for the critical link among the outputted set of equivalent paths according to their respective cost values.

## Description

The present invention relates to communication networks, and more particularly to the load (or traffic) balancing device(s) used in such networks.

A communication network can be schematically reduced to a multiplicity of network equipments, such as edge and core routers, that are connected one to the other and that each constitute a network node adapted to route data packets (or more generally dataflows) between communication terminals or servers that are linked to them.

In such a network it is possible to compute at the node level (or at the network level) the route (or path) that a dataflow must follow to reach its destination at a minimal cost. Such a route can be seen as a sequence of links (or hops) established between couples of consecutive nodes, starting from a source node and ending at a destination node. A route is generally computed to support a chosen traffic according to one or more criteria such as the available bandwidth, the number of hops, the transit delay and the administrative cost.

As it is known by one skilled in the art an overload, named congestion, may occur on a link that is shared by different routes taken by different traffics.

To solve these link congestions, load balancing solutions have been proposed. They all intend to decrease the traffic on a congested link by sharing a part of this traffic among alternate paths (or routes) having the same source and destination nodes as the congested link to assure the service continuity.

A first load balancing solution is named ECMP (Equal Cost Multi-Path). In this solution, if for one destination node several paths exist and have an equal cost, the traffic is equally shared among these paths. Such a solution does not consider paths with unequal cost. Moreover it does not take the current link loads into account.

A second load balancing solution, named EIGRP (Enhanced Interior Gateway Routing Protocol), has been proposed by CISCO. It considers all paths with a cost lower than a configurable value that is N times greater than the lowest cost for one destination node, and then splits the traffic according to the ratio of the metrics associated to the acceptable paths. The metric is a linear combination of the path length (or number of hops) and the path capacity (that is static because it does not take the current link loads into account) by default. The drawbacks of linear combination of criteria in a traffic sharing context are well known by those skilled in the art, as well as a traffic sharing on a per-packet basis. Besides IGRP and EIGRP are distance-vector protocols that are only able to process small networks in terms of node number, whereas the present invention is linked to link-state protocols and therefore is not limited in terms of node number.

A third load balancing solution is named OSPF-OMP (Open Shortest Path First - Optimized Multi-Path). In case of link congestion, alternate paths are generated through relaxation of an optimality criterion (the path length). All paths having path lengths with value differences smaller than typically two are acceptable and paths that are considered as alternate paths are those who do not comprise any congested link. The traffic is divided unequally among the alternate paths according to a static traffic ratio that does not take the current link loads into account (the link load is only taken into account for the detection of link congestion). Although this solution rejects paths containing congested links, it does not attempt to select alternate paths with respect to their current load.

A fourth load balancing solution has been proposed by SPRINT. It is a static deflection routing approach well-suited to a network topology allowing many equal length paths between nodes. In this solution the path selection is based on scalar link costs (or weights) which are set previously. Multiple paths mostly exist because the network is redundant enough and it appears difficult to use such a solution in networks with poor density.

A solution to prevent congestion, named MCIPR (Multi Criteria IP Routing) has also been described in the patent document FR 2 843 263. However it does not perform load-balancing since it shifts the traffic from one path Pi to another one Pj, that is supposed to have better capacities, rather than sharing it among a multiple path as a load balancing would do.

So, the object of this invention is to improve the situation.

For this purpose, it provides a load (or traffic) balancing device, for a communication network comprising a plurality of network equipments defining nodes, such as routers, and comprising a first processing means (of the MCIPR type, for example) arranged to compute a set of equivalent paths between a source node and a destination node to transmit traffic therebetween, considering multiple criteria bearing respective weights, each path being associated with a cost value representative of its rank in the set.

This device is characterized in that it comprises a second processing means arranged :
- to feed the first processing means with a designation of a critical link between a source node and a destination node and with the multiple criteria bearing respective chosen weights, in order for it to output a set of equivalent paths associated with cost values, and
- to be fed by the first processing means to determine a sharing out of the traffic intended for a critical link among the outputted set of equivalent paths according to their respective cost values.

In the following description a "critical" link is a link that is congested or which momentarily cannot be used for operator specific reasons. So, a load balancing device according to the invention is able to work in a reactive mode and/or in a preventive mode.

The load balancing device according to the invention may include additional characteristics considered separately or combined, and notably :
- the criteria are preferably chosen in a group comprising at least the available bandwidth, the number of hops, the transit delay and the administrative cost,
- the first processing means may be arranged to get up-to-date values for the available bandwidth on links and network topology before computing a set of equivalent paths,
- in the preventive mode the second processing means is preferably arranged to feed the first processing means when it receives the designation of at least one critical link and at least one modified weight of one chosen criterion from the network. In that case, the second processing means may be arranged to feed the first processing means at chosen time and/or date and/or during a chosen time period (these chosen time, chosen date and chosen time period being provided by the network management),
- in the reactive mode the second processing means is preferably arranged to feed the first processing means when it receives the designation of at least one detected critical link which is congested, and more preferably as long as it receives a designation (or alarm). But before feeding the first processing means the second processing means determines at least one modified weight for a chosen criterion. Moreover, the device may comprise means for detecting the link congestions and for feeding the second processing means with the designation of at least certain of the detected congested links, and preferably all of them,
- the chosen criterion that is associated with a modified weight is preferably the available bandwidth. In that case and in the reactive mode, the second processing means is preferably arranged to determine the modified weight which is associated to the bandwidth criterion by subtracting the previous weight value to 1 and then dividing the result of this subtraction by a chosen value greater than 1, for example,
- the second processing means may be arranged to adjust the value of each weight considering each modified weight associated to a chosen criterion in order the sum of the whole weights be equal to 1 and the chosen proportions between the weights be respected,
- the first processing means may be arranged to determine K (K >1) equivalent paths and the associated cost values for every possible destination node of a chosen network area. Then the second processing means is arranged to identify, for every critical link ij, all the paths having j has their "best" next hop and the corresponding destination nodes, and then to compute, for each identified destination node belonging to the current network area, the traffic ratio representative of the traffic sharing among the next hops (excepted each initial next hop) which are included in the determined equivalent paths starting from the source node I and ending at the destination node,
- when the smallest cost value associated with the best equivalent path of the set is representative of the ability of this path to transmit a chosen share of a traffic to transmit through the critical link, the second processing means is preferably arranged to compute for each equivalent path of the set a ratio between the worst cost value and the current cost value and then to multiply it by the ratio of the worst path in order to determine the traffic share that the equivalent path is able to transmit,
- the second processing means may be arranged to merge every equivalent path associated with a computed traffic share that is smaller than a chosen threshold with a next equivalent path comprising the same next hop, having the same source and destination nodes and associated both with a computed traffic share equal to or greater than this chosen threshold and having a smaller cost value, and then to share the traffic among the equivalent paths remaining after merging,
- the second processing means may be arranged to perform a dynamic hashing on the dataflows received by the source node and defined by identical protocol, source and destination parameters in order to output a chosen number of value bins, and then to assign these value bins, representative of the received dataflows, to the remaining equivalent paths having the same source and destination nodes according to the computed traffic sharing,
- the second processing means may be arranged to assign the dataflows in a chosen time period and through an incremental flow shifting from the critical link to each of the remaining equivalent paths. The flow shifting onto a remaining equivalent path is then preferably stopped once its associated computed traffic sharing has been reached. Moreover, the second processing means may be arranged to proceed to the flow shifting progressively according to a chosen shifting pace and/or a chosen shifting rate,
- the second processing means may be arranged to update a routing table and a forwarding table of a source node after the traffic sharing has been computed,
- the second processing means may be arranged to share the traffic of a path whose load exceeds a chosen first load threshold, and to stop this sharing when its load is smaller than or equal to the first load threshold minus a chosen second load threshold,
- the first and second processing means are preferably interfaced with a link state protocol with TE-extensions, and especially OSPF-TE (OSPF-Traffic Engineering).

The invention also provides a network equipment defining a node for a communication network (such as a router) and comprising a traffic balancing device such as the one above introduced.

Other features and advantages of the invention will become apparent on examining the detailed specifications hereafter and the appended drawings, wherein :
- figure 1 schematically illustrates an example of communication network comprising nodes provided with a load balancing device according to the invention,
- figure 2 schematically illustrates an example of embodiment of a load balancing device according to the invention, and
- figure 3 schematically illustrates an example of incremental traffic shifting with a hash function in case of traffic splitting on four unequal multi-criteria paths (P₁-P₄) and traffic sharing on three next hops (NH1-NH3).

The appended drawings may not only serve to complete the invention, but also to contribute to its definition, if need be.

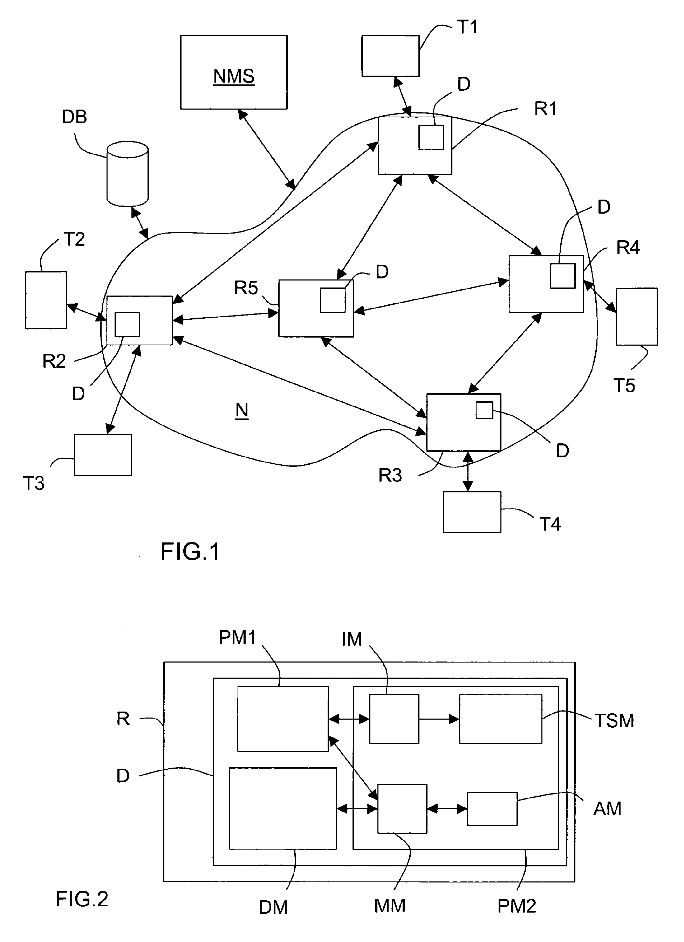

Reference is initially made to figure 1 to describe a communication network N comprising network equipments Ri defining nodes and each provided with a load balancing device D according to the invention, in a nonlimiting embodiment. This communication network N is for example a data network, as an IP network.

Such an IP network N usually comprises a multiplicity of network equipments (or nodes) such as edge and core routers Ri that are adapted to route data packets to other routers, communication terminals Tj or servers that are linked to them.

In the illustrated example, the network N only comprises five routers R1 to R5 (i=1 to 5) connected to one another and to five terminals T1 to T5 (j=1 to 5). But an IP network usually comprises much more routers Ri and terminals Tj.

A connection between two routers is named a link, and a route (or path) between a source router I and a destination router DR comprises a sequence of links. Moreover, the node (or router) following another node into a route (or path) is usually named "next hop". So, the number of hops of a route (or path) defines its length. Note that a destination router DR is the last router in the area to forward a packet but not the destination address of this packet.

A route is generally computed to optimize the traffic transmission between source and destination routers. Usually, in an IP network N each router Ri is arranged to compute the best route to transfer the dataflows it receives considering the associated service, the current network topology and the current link loads.

The network N also comprises a database DB in which the current network topology and the current link loads are stored and updated. So the routers Ri are connected to this database DB, which is preferably a TE-LSA ("Trafic Engineering - Link State Advertisement") database, and communicate with it through a link state routing protocol such as OSPF.

The network N also comprises a network management system NMS that can send and retrieve data to/from the routers Ri in order to manage the network under control of its administrator.

A device D according to the invention aims at computing the best routes to transmit received dataflows to their destination routers DR, but also at solving the network link congestions through the use of load balancing.

A link congestion may occur for the following reasons :
- a link failure that may lead eventually to overload of surrounding links and to topology changes,
- a link overload due to misuse of link load but not to link failure, which does not change the topology, and
- a local increase of traffic demand with no link failure, which does not change the topology.

In the IP context, the load balancing is usually triggered in the router Ri that receives a traffic and is momentarily connected to at least one critical outgoing link. So, the load balancing is preferably distributed in every router Ri in order to avoid error generalization and slow reactivity often associated to centralized processing. That is the reason why every router Ri is provided with a load balancing device D in the illustrated example of IP network.

Moreover, the load balancing according to the invention is intended to decrease the traffic on "critical" links that are congested and/or which momentarily cannot be used for operator specific reasons. So, the load balancing device D may be arranged to work in a dynamic way in order to react to variations of link load (reactive mode) and/or to work in a static way in order to react to operator instructions (preventive mode).

The example of embodiment of load balancing device D illustrated in figure 2 (hereafter named device D) comprises a first processing module PM1 that is in charge of determining route calculation according to multiple criteria. This first processing module PM1 is preferably the one named MCIPR (Multi Criteria IP Routing) which is described in the patent document FR 2 843 263 that is enclosed by reference therein.

In the following description we will considered that the first processing module PM1 is a MCIPR module. This MCIPR module being fully described in the above mentioned patent document it will not be described in detail hereafter.

It is just recalled that a first processing module PM1 of the MCIPR type uses simultaneously multiple criteria with associated relative weights (defining a vector cost) to value the links and outputs several paths (or routes) of equivalent (i.e. Pareto optimal) performance for each destination router DR.

These outputted paths, named "equivalent paths", are ranked according to a cost value based on the priority (or relative weight) of each chosen criterion and the difference with the best observed value.

The MCIPR criteria are preferably chosen in a group comprising at least the available bandwidth, the number of hops, the transit delay and the administrative cost. The choice and relative weight of these criteria initially depends on the operator.

Such a first processing module PM1 is preferably interfaced with a link state protocol with TE-extensions such as OSPF-TE.

The device D also comprises a second processing module PM2 connected to the first processing module PM1 and in charge of the load balancing in dynamic and/or in static mode. In the following description we will consider that the device D works both in dynamic and static modes.

Like the first processing module PM1 the second processing module PM2 is preferably interfaced with a link state protocol with TE-extensions such as OSPF-TE.

In case of link congestion, whereas a device, comprising solely a MCIPR module, shifts the traffic from one path P1 to another path P2, the device D (and more precisely its second processing module PM2) shares the traffic among outgoing links of its router Ri from which the critical link starts and which belongs to equivalent paths computed by its first processing module PM1.

In distributed load balancing where each router Ri computes a best route, a set of K equivalent paths (outputted by the first processing module PM1) corresponds to a set of N different equivalent next hops NH where N ≤ K. So the traffic of a critical link L is shared by the second processing module PM2 among equivalent links leading to the same destination router DR than L and corresponding to the different equivalent next hops.

As will be detailed later on, the traffic among the equivalent links is shared unequally depending on the cost value Mₖ of each equivalent path (or route) Pₖ (k = 1 à K).

As mentioned above, in the described example the device D (and more precisely its second processing module PM2) may be triggered in either preventive or reactive mode.

In preventive mode the operator's instructions are downloaded through the network from the NMS to the concerned router Ri. These instructions include the criteria that must be used by the first processing module PM1 and their respective weights, and the designation (or identity) of one or more critical links, which can be reflected by their administrative costs. Other parameters reflecting the date and/or the time and/or the duration of the dynamic multi-criteria load balancing (DMLB) may also be downloaded.This preventive mode will be detailed later on.

In reactive mode the second processing module PM2 reacts to the reception of the designation(s) (or identity(ies)) of one or more links whose congestion has been detected by a detection module DM during (TE-LSA) database DB checking. Such a detection module DM may be an external module connected to the router Ri. But this detection module DM preferably constitutes a part of the device D, as illustrated in figure 2.

When the detection module DM does not detect any congestion during (TE-LSA) database DB checking, an optimal route calculation is done periodically by the first processing module PM1, without any intervention of the second processing module PM2. So, in this situation the first processing module PM1 periodically outputs a regular route by using a predefined set of criteria associated with predefined weights, and after having checked the current network topology and link loads in the (TE-LSA) database DB. The periodicity is managed by regular timers of the first processing module PM1.

It is important to notice that the regular route may be computed by another route calculation module than PM1. So, this other route calculation module is not necessarily of the MCIPR type. It may be of the Dijkstra type, for example. However if DMLB is to be used MCIPR is mandatory.

Moreover, the (TE-LSA) database DB must be updated regularly.

When the detection module DM detects a link congestion during (TE-LSA) database DB checking, it triggers the second processing module PM2 and more precisely a management module MM it comprises. For example, the detection module DM has detected that one of the links (I, Jₚ) outgoing from its router R (R = I) has a load greater than a chosen threshold ThLoad.

The management module MM de-prioritizes the current regular timers for regular path calculation and link occupation measurement and then replaces them by link load monitoring mechanism and related counters. For example, the related counters concern the link load, the elapsed time and the link load variation, for which a preferred supervision mechanism is defined in OSPF-OMP (as described, for example, in "OSPF Optimized multipath (OSPF-OMP)", C. Villamizar, IETF draft, draft-ietf_ospf-omp-03, january 2002).

The second processing module PM2 also comprises an adaptation module AM coupled to the management module MM and arranged to determine a modified weight for at least one criterion of the regular set of criteria.

Since link overload is the main cause of load balancing, it is the weight w_{BW} of the available bandwidth criterion that is preferably modified, and more precisely increased (unless the operator refuses this option). So, the other criteria are kept since they allow outputting of multiple paths for a destination router DR by the first processing module PM1 and respect the initial choice of the operator. These other possible criteria include the theoretical transit delay, the link load, the path length and the administrative cost.

So, the adaptation module AM increases the weight of the available bandwidth criterion. It may use the following formula to upgrade the (regular) weight w_{BW} of the bandwidth criterion : w_{BW}⁺ = (1 - w_{BW}) / R_{B}, where w_{BW}⁺ is the upgraded weight and R_{B} is a value greater than 1, and preferably equal to 2 by default, and representative of the relative weight increment ratio for the bandwidth criterion.

After having modified the weight w_{BW} of the bandwidth criterion, the adaptation module AM adjusts the respective weights w_{q} (q ≠ WB) of the other (regular) criteria such that Σw_{q} = 1 and the predefined proportions between the weights wq are respected.

Then, the second processing module PM2 (and preferably its management module MM) feeds the first processing module PM1 with the modified and adjusted criteria weights w_{q} in order it computes K best paths P₁(DRₘ), P₂(DRₘ), ..., P_{K}(DRₘ) and their associated cost values M₁(DRₘ), ..., M_{K}(DRₘ) for each destination router DRₘ of the considered network area Z. Here M₁ ≤ M₂ ... ≤ M_{K}, M_{K} being the worst cost value.

The second processing module PM2 is configured to feed the first processing module PM1 as long as it receives a designation of a detected critical link.

Let A(I) = {(I, j₁) ... (I, J_{P})} the set of critical links (i.e. congested or to be unloaded) outgoing from a router R = I and ending at the router Jp.

Let A_{Z} = ∪_{I∈A} A(I) the set of critical links in the whole network area Z.

The first processing module PM1, in either reactive or preventive mode, is triggered on any router R = node I of the network area Z with A(I)≠ ª⌀.

When it is triggered, the first processing module PM1 checks the current network topology and link loads in the (TE-LSA) database DB. Then, it starts to compute simultaneously all the routes (or paths) from its router R (which defines the source node I) to all other routers in the network area Z with the up-to-date link load values and topology flooded in the (TE-LSA) database DB, and every information received from the second processing module PM2 (in particular the set of criteria and the associated modified or adjusted weight w_{q}).

The second processing module PM2 comprises an identification module IM that receives the equivalent paths computed by the first processing module PM1. For each congested link (I, Jₚ) ∈ A(R=I) outgoing from the router R (or node I) and ending at the router Jₚ, the identification module IM identifies all computed equivalent paths outgoing from router R (node I) and having the router Jp as next hop and their corresponding destination routers DR₁, ..., DR_{M}.

The second processing module PM2 also comprises a traffic sharing module TSM arranged to compute dynamic traffic sharing among the next hops Jₚ for each destination router DRₘ in the area.

For this purpose, the traffic sharing module TSM may, for example, first compute the traffic ratio Qn to send on each of the paths Pₙ = P₁(DRₘ), ..., P_{K}(DRₘ).

Preferably the traffic ratio Qn is related to the cost value ratio M_{K}/Mₙ. For example, for n=1 to K-1, we have : Qn = (M_{K}/Mₙ).QK, with Σ_{n = 1 to K} Qn = 100.

Then, the traffic sharing module TSM preferably merges every equivalent path carrying less than a chosen traffic ratio threshold ThQ (%) of the traffic to share, to the next (nearest) better equivalent path Pₖ which has the same next hop Jₚ, whose traffic ratio Qk is greater than or equal to ThQ, and has an equal or smaller cost value Mₖ. After this merging step it remains K' equivalent paths. This merging is based on the fact that if the cost value Mₖ of a path Pₖ is dₖ times worse (or greater) than M₁ then P₁ should receive dₖ times more traffic than Pₖ.

The traffic ratio threshold ThQ (which defined the minimum traffic ratio Qk to be carried on an outgoing link), and also the granularity GrQ of the traffic ratio Qk, are operator specific parameters.

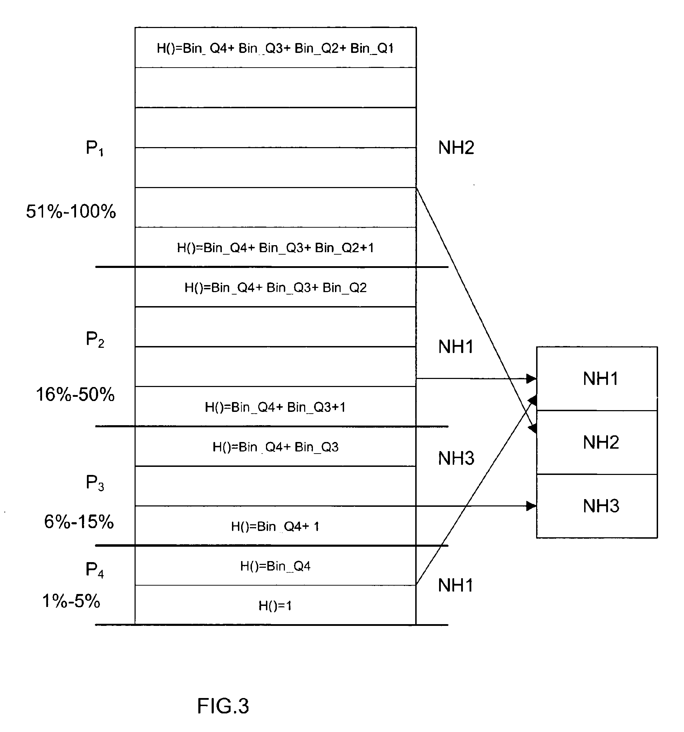

Then, the traffic sharing module TSM preferably performs a dynamic hashing for an unequal distribution of the dataflows received by its router R (source node I), as illustrated in figure 3.

The traffic sharing is preferably flow-based. Moreover flow disruption can be minimized by using a dynamic (or table-based) flow identifier hashing scheme.

The dataflows are represented by multiplets including the protocol identifier, the source and destination ports, and the IP source and destination. A hash function H() is applied to these flow identifiers to output a chosen number of value bins (or buckets) Bin_q, for example q = 1 to 100, so that each bin corresponds to 1% of the traffic to share. Then the traffic sharing module TSM assigns these value bins (Bin_q), representative of the received dataflows, to the K' remaining equivalent paths P_{k'} having the same source router R (node I) and destination router DRₘ (in the area) according to the computed traffic sharing.

For example and as illustrated in figure 3, the dataflow assignment policy is as mentioned hereafter:

Assign each bin (Bin_q) to the next hops (NH).

For each remaining equivalent path Pₖ (k = 1 to K'), assign Bin(Q1+..+Qk-1) up to Bin(Q1+..+Qk-1+Qk) to the next hop of Pₖ (NH(Pₖ)), which has traffic ratio Qk, with Q0 = 0.

This assignment represents the goal to achieve by the second processing module PM2 within a given time period, through an incremental dataflow shifting from a previous regular path (comprising the critical link) to the remaining equivalent paths P₁, ..., P_{K},. The traffic sharing module TSM preferably stops the dataflow shifting onto a remaining equivalent path Pₖ, once its associated computed traffic sharing Qk' has been reached.

In the example illustrated in figure 3, the hash function H() is applied to received dataflows (or traffic) that must be split on four unequal multi-criteria paths P₁-P₄ and shared on three next hops NH1-NH3. In this example each one of the 100 bins are dedicated to 1% of the traffic sharing, and path P4 is dedicated to the traffic ratio sharing 0%-5% (Bin_1 to Bin_5, Bin_Q4 = 5), path P3 is dedicated to the traffic ratio sharing 6%-15% (Bin_6 to Bin_15, Bin_Q3 + Bin_Q4 = 15), path P2 is dedicated to the traffic ratio sharing 16%-50% (Bin_16 to Bin_50, Bin_Q2 + Bin_Q3 + Bin_Q4 = 50), and path P1 is dedicated to the traffic ratio sharing 51%-100% (Bin_51 to Bin_100, Bin_Q1 + Bin_Q2 + Bin_Q3 + Bin_Q4 = 100).

In order to avoid traffic oscillations, the traffic is preferably shifted progressively from one link to the other ones according to a chosen shifting pace and/or a chosen shifting rate. For example the pace of the traffic shifting can be fine-tuned through mechanisms similar to those used in OSPF-OMP (defining for example the basic quantity of flows to shift at one time and the number of the quantities and rules to decide when to adjust the shifting pace, as described).

The traffic sharing module TSM may be arranged to implement a stability mechanism (or hysteresis thresholding) on block or region boundaries. For example, it may share the traffic dedicated to the determined equivalent path P₁ having the smallest cost value M₁ when its load exceeds the chosen load threshold ThLoad (for example 50%), but to stop this sharing when its load is smaller than or equal to the chosen load threshold ThLoad minus another chosen load threshold ThLoadBack (for example 45%).

Preferably, after the traffic sharing step the second processing module PM2 accordingly updates the (TE-LSA) database DB, and the routing table and the forwarding table that are stored in a dedicated memory of its router R.

The working of the device D in the preventive mode is very similar to its working in the reactive mode.

As mentioned before, a first difference comes from the triggering of the device D, and more precisely the management module MM of its second processing means MM. This management module MM is triggered upon request of the operator through instructions, as above mentioned.

After having received the operator instructions, the management module MM de-prioritizes the current timers as in the reactive mode. Then the adaptation module AM upgrades (or modifies) the weight of at least one chosen criterion (preferably the available bandwidth) according to the operator instructions, and adjusts the other weights as in the reactive mode while respecting the remaining relative proportions.

Then the management module MM downloads information on critical links, updates the administrative cost of links accordingly and feeds the first processing module PM1 with the modified and adjusted criteria weights and the updated administrative cost of links.

The equivalent path computation is unchanged. Moreover, the traffic sharing steps (path merging and traffic ratio computation) are also unchanged. The shifting step differs slightly from the one in reactive mode because the traffic shifting module TSM must compute the shifting rate and pace according to operator instructions.

The device D, and more precisely its first PM1 and second PM2 processing modules and its detection module MM, are preferably software modules, but they may be also respectively made of electronic circuit(s) or hardware modules, or a combination of hardware and software modules.

The invention offers a load balancing device that can be distributed in every router allowing a dynamic and fast congestion processing.

Moreover the invention is suitable for both long term (hours) and short term (minutes) congestions.

More the dynamic hashing implemented by load balancing device depends highly on the outgoing link occupation, but contrary to usual approaches, considers it during path selection rather than as a constrain at the flow assignment stage.

The invention is not limited to the embodiments of load balancing device and network equipment described above, only as examples, but it encompasses all alternative embodiments which may be considered by one skilled in the art within the scope of the claims hereafter.

## Claims

1. Load balancing device (D), for a communication network (N) comprising a plurality of network equipments (R) defining nodes, and comprising a first processing means (PM1) arranged to compute a set of equivalent paths (P) between a source node (I) and a destination node (DR) to transmit traffic therebetween, considering multiple criteria bearing respective weights, each path (P) being associated with a cost value (M) representative of its rank in the set, **characterized in that** it comprises a second processing means (PM2) arranged i) to feed said first processing means (PM1) with a designation of a critical link between a source node (I) and a destination node (DR) and with said multiple criteria bearing respective chosen weights in order it outputs a set of equivalent paths (P) associated with cost values (M), and ii) to be fed by said first processing means (PM1) to determine a sharing out of a traffic intended for said critical link among said outputted set of equivalent paths according to their respective cost values.

2. Load balancing device (D) according to claim 1, wherein said criteria are chosen in a group comprising at least the available bandwidth, the number of hops, the transit delay and the administrative cost.

3. Load balancing device (D) according to one of claims 1 and 2, wherein said first processing means (PM1) is arranged to get up-to-date values for the available bandwidth on links and network topology before computing said set of equivalent paths.

4. Load balancing device (D) according to one of claims 1 to 4, wherein said second processing means (PM2) is arranged to feed said first processing means (PM1) upon reception from said network (N) of the designation of at least one critical link and at least one modified weight of a chosen one of said multiple criteria.

5. Load balancing device (D) according to claim 4, wherein said second processing means (PM2) is arranged to feed said first processing means (PM1) at chosen time and/or date and/or during a chosen time period, said chosen time, chosen date and chosen time period being provided by said network (N).

6. Load balancing device (D) according to one of claims 1 to 5, wherein said second processing means (PM2) is arranged to feed said first processing means (PM1) upon reception of the designation of at least one detected critical link which is congested.

7. Load balancing device (D) according to claim 6, wherein said second processing means (PM2) is arranged to determine at least one modified weight for a chosen one of said multiple criteria.

8. Load balancing device (D) according to one of claims 6 and 7, wherein said second processing means (PM2) is configured to feed said first processing means (PM1) as long as it receives said designation.

9. Load balancing device (D) according to one of claims 6 to 8, wherein it comprises detection means (DM) arranged to detect link congestions and to feed said second processing means (PM2) with the designation of at least certain of said detected links that are congested.

10. Load balancing device (D) according to one of claims 4 and 6 in combination with claim 2, wherein said chosen one of said multiple criteria is the available bandwidth.

11. Load balancing device (D) according to claim 10, wherein said second processing means (PM2) is arranged to determine said modified weight associated to said bandwidth criterion by subtracting the previous weight value to 1 and then dividing the result of said subtraction by a chosen value greater than 1.

12. Load balancing device (D) according to one of claims 4 to 11, wherein said second processing means (PM2) is arranged to adjust the value of each weight considering each modified weight associated to a chosen one of said multiple criteria in order the sum of the whole weights be equal to 1 and chosen proportions between said weights are respected.

13. Load balancing device (D) according to one of claims 1 to 12, wherein said first processing means (PM1) is arranged to determine K (K >1) equivalent paths (P) and the associated cost values (M) for every possible destination node (DR) of a chosen network area (Z), and said second processing means (PM2) is arranged i) to identify, for every critical link (j), all paths having said link (j) has best next hop and the corresponding destination nodes (DR), ii) then to compute, for each identified destination node (DR) belonging to a current network area (Z), the traffic ratio representative of the traffic sharing among the next hops (NH), excepted each chosen next hop (Jₚ), included in the determined equivalent paths starting from the source node (I) and ending at said destination node (DR).

14. Load balancing device (D) according to claim 13, wherein the worst cost value (M_{K}) associated with the worst equivalent path (P_{K}) of said set is representative of the ability of said path (P_{K}) to transmit a chosen share (QK) of a traffic to transmit through said critical link, and wherein said second processing means (PM2) is arranged to compute for each equivalent path (Pₙ) of said set a ratio (M_{K}/Mₙ) between said worst cost value (M_{K}) and its cost value (Mₙ) and then to multiply said ratio by the ratio of said worst path to determine the traffic share (Qn) that said equivalent path (Pₙ) is able to transmit.

15. Load balancing device (D) according to claim 14, wherein said second processing means (PM2) is arranged i) to merge every equivalent path (Pₖ) associated with a computed traffic share (Qk) smaller than a chosen threshold (ThQ) with a next equivalent path (P_{k'}) comprising the same next hop, having the same source (I) and destination (DR) nodes and associated both with a computed traffic share (Qk') equal to or greater than said chosen threshold (ThQ) and having a smaller cost value (M_{k'}), and then ii) to share said traffic among the equivalent paths remaining after merging.

16. Load balancing device (D) according to claim 15, wherein said second processing means (PM2) is arranged i) to perform a dynamic hashing on dataflows received by said source node (I) and defined by protocol, source and destination parameters in order to output a chosen number of value bins, and then ii) to assign said value bins, representative of said received dataflows, to said remaining equivalent paths (Pₖ) having the same source (I) and destination nodes (DR) according to the computed traffic sharing.

17. Load balancing device (D) according to claim 16, wherein said second processing means (PM2) is arranged to assign said dataflows in a chosen time period and through an incremental flow shifting from said critical link to each of said remaining equivalent paths, the flow shifting onto a remaining equivalent path (Pₖ) being stopped once its associated computed traffic sharing (Qk) has been reached.

18. Load balancing device (D) according to claim 17, wherein said second processing means (PM2) is arranged to proceed to said flow shifting progressively according to a chosen shifting pace and/or a chosen shifting rate.

19. Load balancing device (D) according to one of claims 13 to 18, wherein said second processing means (PM2) is arranged to update a routing table and a forwarding table of a source node after said traffic sharing has been computed.

20. Load balancing device (D) according to one of claims 13 to 19, wherein said second processing means (PM2) is arranged to share the traffic of a path whose load exceeds a chosen first load threshold (ThLoad) and to stop said sharing when its load is smaller than or equal to said first load threshold minus a chosen second load threshold (ThLoadBack).

21. Load balancing device (D) according to one of claims 1 to 20, wherein said first (PM1) and second (PM2) processing means are interfaced with a link state protocol with TE-extensions, and especially OSPF-TE.

22. Network equipment (R), defining a node for a communication network (N), **characterized in that** it comprises a load balancing device (D) according to one of claims 1 to 21.

23. Network equipment according to claim 22, **characterized in that** it constitutes a router (R).
